# EUROPEAN PATENT SPECIFICATION

(11) **EP 3 627 877 B1**
(45) Date of publication and mention of the grant of the patent: **15.09.2021**
(21) Application number: 19195268.8
(22) Date of filing: 04.09.2019
(51) Int. Cl.: H04W 24/02, H04W 88/08

(54) **CELLULAR TELECOMMUNICATIONS NETWORK**
MOBILFUNKNETZWERK
RÉSEAU DE TÉLÉCOMMUNICATIONS CELLULAIRES

(30) Priority: 21.09.2018 EP 18195908
(43) Date of publication of application: 25.03.2020
(73) Proprietor: British Telecommunications public limited company, London EC1A 7AJ (GB)
(72) Inventor: MACKENZIE, Richard, London EC4V 5BT (GB)
(74) Representative: British Telecommunications public limited company Intellectual Property Department

(56) References cited:
- US-A1- 2018 234 882
- VALASTRO GIANLUCA CAMILLO ET AL: "A SDN/NFV based C-RAN architecture for 5G Mobile Networks", 2018 INTERNATIONAL CONFERENCE ON SELECTED TOPICS IN MOBILE AND WIRELESS NETWORKING (MOWNET), IEEE, 20 June 2018 (2018-06-20), pages 1-8, XP033383120, DOI: 10.1109/MOWNET.2018.8428882
- "3rd Generation Partnership Project; Technical Specification Group Radio Access Network; Study on new radio access technology: Radio access architecture and interfaces (Release 14)", 3GPP STANDARD ; TECHNICAL REPORT ; 3GPP TR 38.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V14.0.0, 3 April 2017 (2017-04-03), pages 1-91, XP051298041,
- ASENSIO ADRIAN ET AL: "Dynamic virtual network connectivity services to support C-RAN backhauling", JOURNAL OF OPTICAL COMMUNICATIONS AND NETWORKING, INSTITUTE OF ELECTRICAL AND ELECTRONICS ENGINEERS, US, vol. 8, no. 12, 1 December 2016 (2016-12-01), XP011639732, ISSN: 1943-0620, DOI: 10.1364/JOCN.8.000B93 [retrieved on 2017-01-23]
- CATT: "Analysis on Fronthaul Split Options", 3GPP DRAFT; R2-162570, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 2 April 2016 (2016-04-02), XP051082466, Retrieved from the Internet: URL:http://www.3gpp.org/ftp/tsg_ran/WG2_RL 2/TSGR2_93bis/Docs/ [retrieved on 2016-04-02]

## Description

### Field of the Invention

The present invention relates to a cellular telecommunications network. In particular, it relates to a cellular telecommunications network implementing a centralised radio access network.

### Background

Modern cellular networks support Centralised Radio Access Network (C-RAN) architectures in which a base station may be split into a central unit and a distributed unit. The central unit interconnects a core cellular network with a plurality of distributed units, and the plurality of distributed units each communicate with a plurality of UEs. The various protocol layers of the cellular protocol in use are split between the central and distributed units such that the distributed units implement the lowermost layer (e.g. the radio frequency layer) and optionally one or more higher layers, and all other higher layers are implemented in the central unit. As more protocol layers are implemented in the central unit, then the central unit may improve coordination across multiple distributed units and thereby improve Quality of Service. However, such protocol splits require higher capacity links between the central unit and distributed units, so a balance must be struck when determining which protocol split to use.

Article "A SDN/NFV based C-RAN architecture for 5G Mobile Networks", Valastro Gianluca Camillo et al, discloses a novel architecture design for Radio Access Networks (RANs) to address critical elements in resource management.

### Summary of the Invention

According to a first aspect of the invention, there is provided a method as claimed in Claim 1.

The change in the membership of the cluster of distributed base station units may an addition of a new distributed base station unit to the cluster, and the method may further comprise the step of: before the step of determining to use the second functional split, initiating a handover of the new distributed base station unit from a second central base station unit to the first central base station unit.

Before the step of performing the handover of the new distributed base station unit, the method may further comprise the step of: causing the second central base station unit and new distributed base station unit to use the first functional split in which the first set of protocol functions are further implemented in the second central base station unit and the second set of protocol functions are further implemented in the new distributed base station unit.

The method may further comprise the steps of: receiving data relating to the membership of the cluster of distributed base station units; and determining, based on the data, that the first central base station unit and each member of the cluster of distributed base station units should use the second functional split.

The first and second central base station units may be implemented on separate virtual machines on a network node.

According to a second aspect of the invention, there is provided a computer program product comprising instructions which, when the program is executed by a computer, cause the computer to carry out the method of the first aspect of the invention. The computer program may be stored on a computer-readable data carrier.

According to a third aspect of the invention, there is provided a network node for a cellular telecommunications network, the network node comprising a transceiver, memory and processor adapted to cooperate to implement the steps of the method of the first aspect of the invention.

### Brief Description of the Figures

In order that the present invention may be better understood, embodiments thereof will now be described, by way of example only, with reference to the accompanying drawings in which:
Figure 1 is a schematic diagram of a cellular telecommunications network of an embodiment of the present invention;
Figure 2 is a schematic diagram of a central base station unit and distributed base station unit of the cellular network of Figure 1;
Figure 3a is a schematic diagram of the cellular telecommunications network of Figure 1 at time t₁;
Figure 3b is a schematic diagram of the cellular telecommunications network of Figure 1 at time t₂;
Figure 3c is a schematic diagram of the cellular telecommunications network of Figure 1 at time t₃;
Figure 3d is a schematic diagram of the cellular telecommunications network of Figure 1 at time t₄;
Figure 3e is a schematic diagram of the cellular telecommunications network of Figure 1 at time t₅; and
Figure 4 is a flow diagram illustrating a method of an embodiment of the present invention.

### Detailed Description of Embodiments

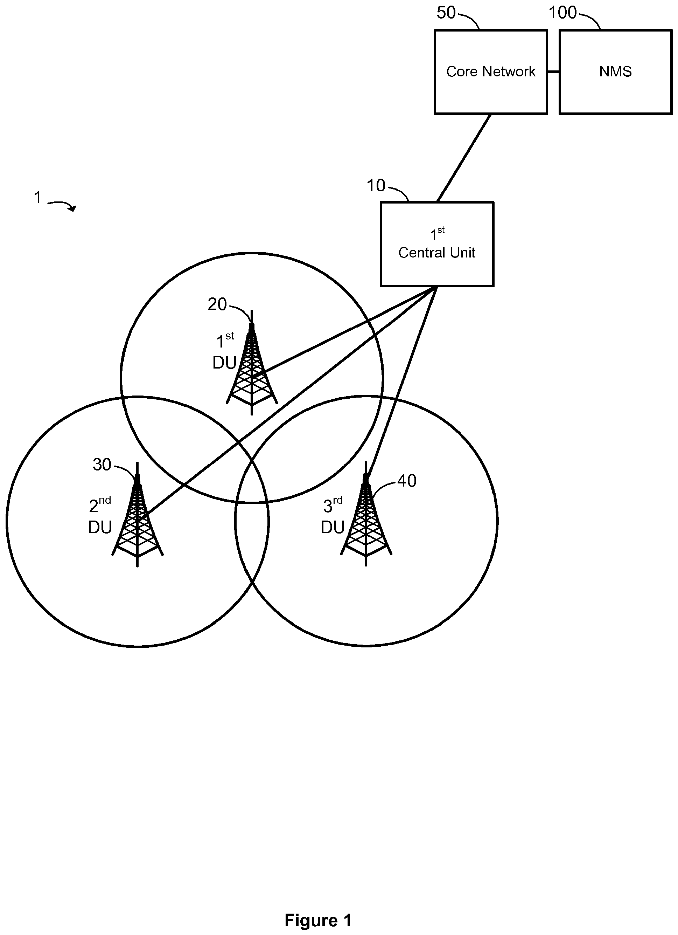

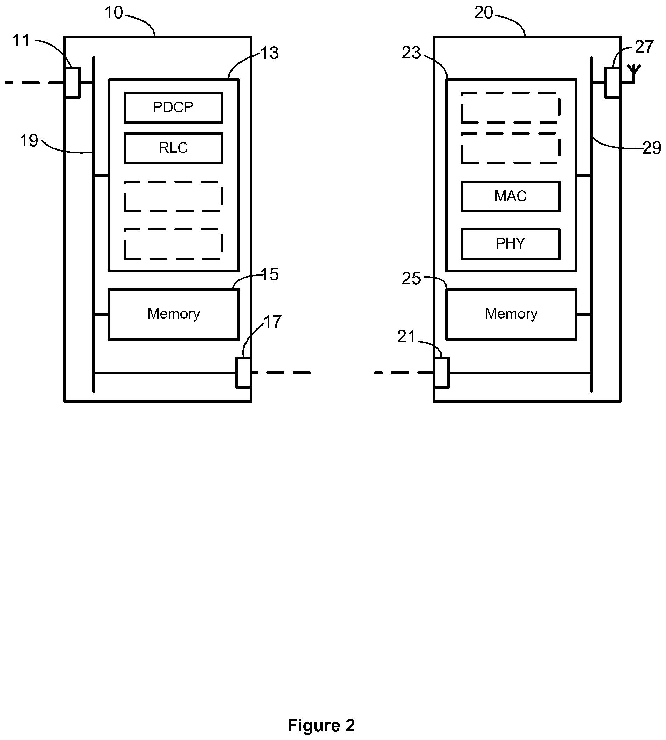

A first embodiment of a cellular telecommunications network 1 will now be described with reference to Figures 1 and 2. The cellular telecommunications network 1 is based on a Centralised Radio Access Network (C-RAN) architecture having a first central unit 10, and first, second and third distributed units ("1^{st}/2^{nd}/3^{rd} DU" in the Figures) 20, 30, 40. The central unit 10 interconnects each of the first, second and third distributed units 20, 30, 40 to a cellular core network 50, which includes a Network Management System (NMS) 100. The coverage areas of each of the first, second and third distributed units 20, 30, 40 are shown by their respective enveloping circles.

Figure 2 illustrates the central unit 10 and the first distributed unit 20 in more detail. As shown, the central unit 10 has a first transceiver 11, a processor 13, memory 15, and a second transceiver 17, all connected via bus 19. The first transceiver 11 is a wired communications interface such that the central unit 10 may communicate with one or more cellular core networking nodes (such as the NMS 100). In this embodiment, the second transceiver 17 is a wired communications interface such that the central unit 10 may communicate with each of the first, second, and third distributed units 20, 30, 40. The transceivers, processor and memory are configured to cooperate to define a Software Defined Networking (SDN) operating environment, allowing the central unit 10 to reconfigure on demand.

Furthermore, the first distributed unit 20 also includes a first transceiver 21 for wired communication with the central unit 10, a processor 23, memory 25, a second transceiver 27 for wireless communication with one or more User Equipment (UE), all connected via bus 29. Similarly, the transceivers, processor and memory are configured to cooperate to define a Software Defined Networking (SDN) operating environment, allowing the first distributed unit 20 to reconfigure on demand.

Figure 2 also illustrates the processors of the central unit 10 and first distributed unit 20 implementing different functions of their operating protocol (which, in this embodiment, is the Long Term Evolution (LTE) protocol). The various functions of the LTE protocol are split between the respective processors 13, 23 of the central unit 10 and first distributed unit 20 such that the first distributed unit 20 implements the physical (PHY) function and Medium Access Control (MAC) function, and the central unit 10 implements the Radio Link Control (RLC) function, and Packet Data Convergence Control (PDCP) function. In doing so, the central unit 10 may coordinate transmissions of several distributed units to improve Quality of Service (QoS) in the cellular network 1.

The processors of the central unit 10 and first distributed unit 20 are able to reconfigure (as they operate SDN environments) to implement different functional splits, such as:
- A) First Distributed Unit 20: Lower PHY, Central Unit 10, Higher PHY, MAC, RLC, PDCP;
- B) First Distributed Unit 20: PHY, Central Unit 10: MAC, RLC, PDCP;
- C) First Distributed Unit 20: PHY, MAC, Central Unit 10: RLC, PDCP (as shown);
- D) First Distributed Unit 20: PHY, MAC, RLC Central Unit 10: PDCP;
- E) First Distributed Unit 20: PHY, MAC, RLC, PDCP Central Unit 10: N/A;

Furthermore, the central unit 10 and first distributed unit 20 may implement further functions (in which case further functional splits would be possible).

In this embodiment, the second and third distributed units 30, 40 are similar to the first distributed unit 20.

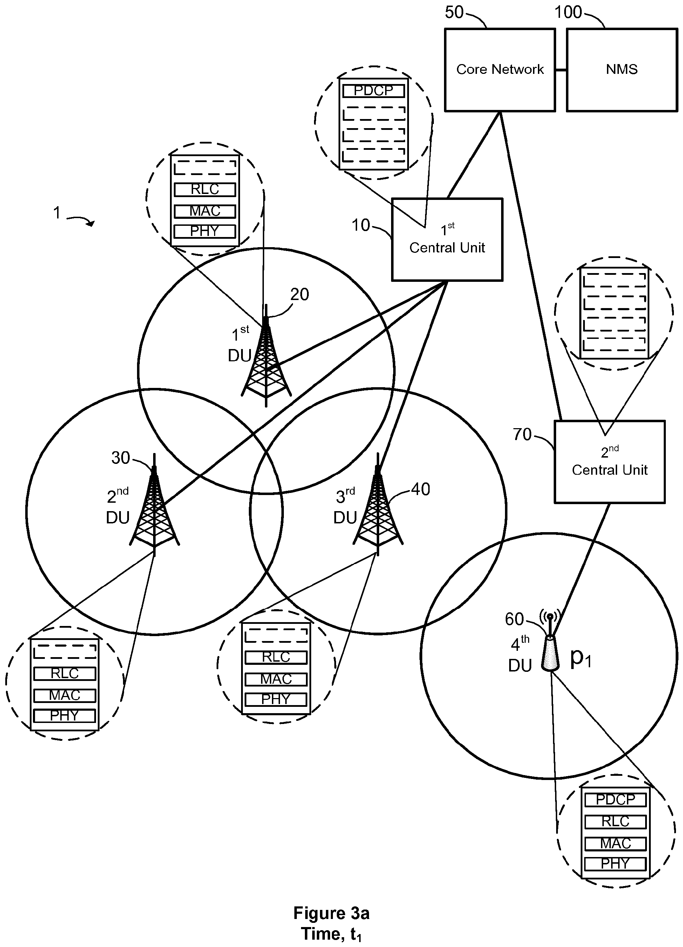

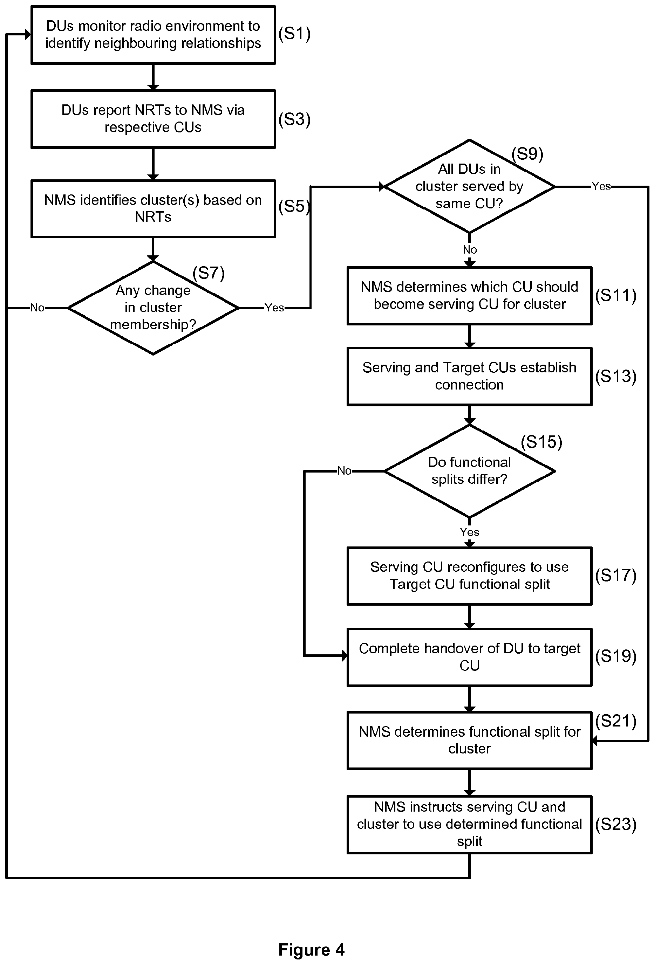

A first embodiment of a method of the present invention will now be described with reference to Figures 3a to 3e and the flow diagram of Figure 4. Figure 3a illustrates the cellular telecommunications network 1 at time t₁, in which the central unit 10 interconnects the first, second and third distributed units 20, 30, 40 to the core network 50 and implement functional split D (noted above) such that the first central unit 10 implements the PDCP function and the first, second and third distributed units 20, 30, 40 implement the PHY, MAC and RLC functions.

Figure 3a further illustrates a fourth distributed unit 60. The fourth distributed unit 60 is similar to the first, second and third distributed units 20, 30, 40, but is mobile by virtue of being mounted on a train (not shown). Furthermore, the fourth distributed unit 60 is connected to a second central unit 70, which is similar to the first central unit 10 and has onward connections to the cellular core network 50 (and thus an onward connection to the NMS 100). The second central unit 70 and fourth distributed unit 60 implement functional split E (noted above), such that the fourth distributed unit 60 implements all functions of the protocol stack. In Figure 3a, the fourth distributed unit 60 is located at position p₁.

In this starting scenario as illustrated in Figure 3a, the NMS 100 stores a cluster database identifying each cluster of distributed units and its membership. The definition of a cluster will become clear upon review of the following embodiment, but it is noted that in this starting scenario the first, second and third distributed units 20, 30, 40 are all members of a first cluster but the fourth distributed unit 60 is not part of the first (or any other cluster). The fourth distributed unit 60 is therefore a "lone" distributed unit.

In a first step of this embodiment (step S1), each distributed unit 20, 30, 40, 60 monitors (directly or indirectly) its radio environment to identify one or more neighbouring relationships with other distributed units in the cellular telecommunications network 1. In this embodiment, this step is triggered periodically upon a) receipt of a measurement report from UEs connected to each distributed unit 20, 30, 40, 60 and/or b) a network listen function by each distributed unit 20, 30, 40, 60. In response, each distributed unit 20, 30, 40, 60 may cooperate with its respective central unit 10, 70 to process the data (that is, using the processing functions that are implemented in the central unit). Each distributed unit 20, 30, 40, 60 then updates a Neighbour Relations Table (NRT), which identifies each neighbouring distributed unit and further identifies the strength of a signal (e.g. the Reference Signal Received Power, RSRP) from each neighbouring distributed unit. Following this step, the NRTs for each distributed unit are:

**Table 1: NRT for the First Distributed Unit 20 at time t₁**

| **Base Station Identifier (eCGI)** | **RSRP (dBm)** |
|---|---|
| Second Distributed Unit | > X |
| Third Distributed Unit | > X |

**Table 2: NRT for the Second Distributed Unit 30 at time t₁**

| **Base Station Identifier (eCGI)** | **RSRP (dBm)** |
|---|---|
| First Distributed Unit | > X |
| Third Distributed Unit | > X |

**Table 3: NRT for the Third Distributed Unit 40 at time t₁**

| **Base Station Identifier (eCGI)** | **RSRP (dBm)** |
|---|---|
| First Distributed Unit | > X |
| Second Distributed Unit | > X |
| Fourth Distributed Unit | < X |

**Table 4: NRT for the Fourth Distributed Unit 60 at time t₁**

| **Base Station Identifier (eCGI)** | **RSRP (dBm)** |
|---|---|
| Second Distributed Unit | < X |

Although the value of the threshold X may vary in any particular cellular network, in this embodiment the value is -100dBm. This threshold may also be in the range of -120dBm to -90dBm.

In step S3, each distributed unit 20, 30, 40, 60 reports these NRTs to the NMS 100 via their respective central units 10, 70. In doing so, the NMS 100 records the central unit associated with each distributed unit reporting its NRT. In step S5, the NMS 100 identifies one or more clusters of distributed units based on this data. In this embodiment, a cluster is a subset of distributed units wherein each member of the cluster receives a reference signal from at least one other member of the cluster above strength X dBm. Based on the above data, the first, second and third distributed units 20, 30, 40 are all in a cluster (as they all measure an RSRP value for another member of the cluster above X dBm), but the fourth distributed unit 60 is not in a cluster (as it does not measure an RSRP value for a member of the cluster above X dBm).

In step S7, the NMS 100 determines if there has been a change in membership of any cluster of distributed units based on a comparison of the data in the cluster database and the identified cluster in step S5. As noted above, the initial scenario for the cellular network 1 is that there is a first cluster comprising the first, second and third distributed units 20, 30, 40. Following step S5, the latest NRTs indicate that the first cluster still comprises the first, second and third distributed units 20, 30, 40. There is therefore no change in membership of the first cluster. Accordingly, this first iteration of the method ends.

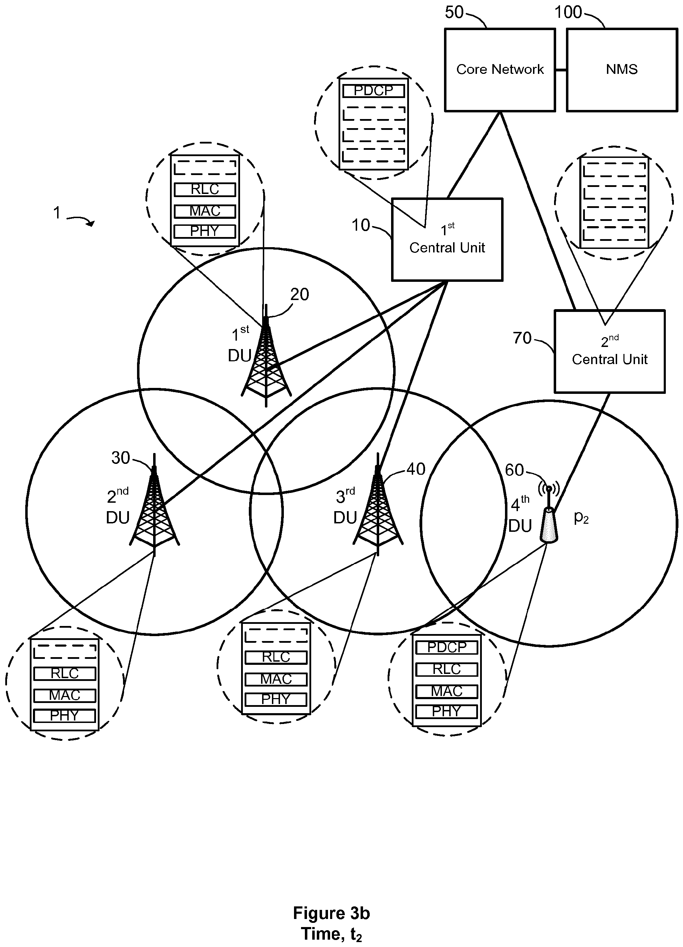

The method then loops back to step S1 for a second iteration. The starting point for the second iteration is at time t₂ as shown in Figure 3b, in which the fourth distributed unit 60 moves to a new position (p₂) having a greater overlapping coverage area with the third distributed unit 40. In the second iteration of step S1, the first, second, third and fourth distributed units 20, 30, 40, 60 update their respective NRTs based on new measurements, thus:

**Table 5: NRT for the First Distributed Unit 20 at time t₂**

| **Base Station Identifier (eCGI)** | **RSRP (dBm)** |
|---|---|
| Second Distributed Unit | > X |
| Third Distributed Unit | > X |

**Table 6: NRT for the Second Distributed Unit 30 at time t₂**

| **Base Station Identifier (eCGI)** | **RSRP (dBm)** |
|---|---|
| First Distributed Unit | > X |
| Third Distributed Unit | > X |

**Table 7: NRT for the Third Distributed Unit 40 at time t₂**

| **Base Station Identifier (eCGI)** | **RSRP (dBm)** |
|---|---|
| First Distributed Unit | > X |
| Second Distributed Unit | > X |
| Fourth Distributed Unit | > X |

**Table 8: NRT for the Fourth Distributed Unit 60 at time t₂**

| **Base Station Identifier (eCGI)** | **RSRP (dBm)** |
|---|---|
| Second Distributed Unit | > X |

The fourth distributed unit 60 has therefore moved into a position in which the RSRP of its signals as measured by the third distributed unit 40 has risen above X dBm and the RSRP of the third distributed unit's signal as measured by the fourth distributed unit 60 has also risen above X dBm.

In the second iterations of steps S3 and S5, each distributed unit 20, 30, 40, 60 reports its NRT to the NMS 100, and the NMS 100 identifies one or more clusters of distributed units based on this data. As the third distributed unit 40 now has a neighbouring relationship with the fourth distributed unit 60 above a first threshold (i.e. RSRP > X dBm), then the NMS 100 determines that the first cluster now comprises the first, second, third and fourth distributed units 20, 30, 40, 60. For the sake of completeness, it is not necessary for the NRTs for the third and fourth distributed unit to both indicate that the neighbouring relationship has risen above a threshold. That is, the NMS 100 may determine that the cluster now also includes the fourth distributed unit 60 if one of the NRTs of the third or fourth distributed unit 40, 60 indicate that the neighbouring relationship has risen above the threshold (e.g. if the NRT was updated based on a measurement report from a UE connected to one of the third or fourth distributed unit).

In the second iteration of step S7, the NMS 100 positively determines that there has been a change in membership of the first cluster. The NMS 100 responds to this determination by reconfiguring the cellular network 1 such that all distributed units are served by the same central unit and have the same functional split. In this embodiment, this is achieved by implementing the following steps.

In step S9, the NMS 100 determines whether all distributed units in the first cluster are served by the same central unit. If so, then the process proceeds to step S21. However, in this embodiment, this determination is negative as the first, second and third distributed units 20, 30, 40 are served by the first central unit 10 but the fourth distributed unit 60 is served by the second central unit 70. In response, in step S11, the NMS 100 determines which central unit should become the common central unit to serve all distributed units of the cluster. This determination may be based on the number of handovers that must be performed, the quality of the connection between each central unit and each distributed unit, and/or the spare processing capacity of the central units. In this embodiment, the NMS 100 determines that the fourth distributed unit 60 should handover to the first central unit 10 and sends an instruction message to the second central unit 70.

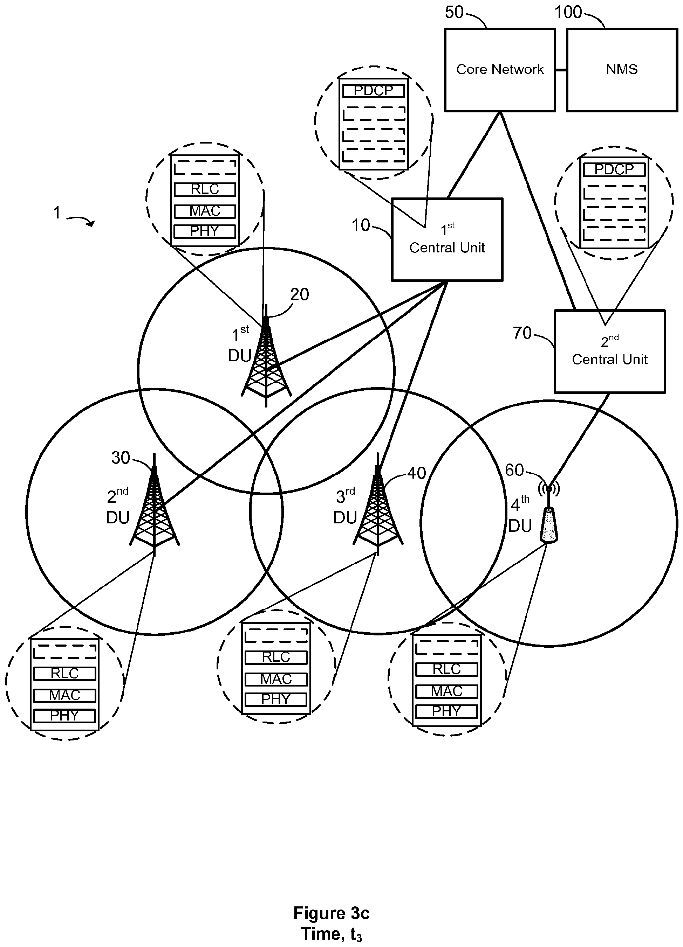

In step S13, the second central unit 70 establishes a connection (e.g. an X2 connection) with the first central unit 10. Once established, the second central unit 70 sends a request message to the first central unit 10 to discover the current functional split implemented by the first central unit 10. The first central unit 10 responds with information on its functional split (e.g. using an identifier). In step S15, the second central unit 70 determines whether the functional split in use between the second central unit 70 and fourth distributed unit 60 differs from the functional split implemented by the first central unit 10. If not, then the process proceeds to step S19. However, in this embodiment, this determination is positive and the process proceeds to step S17 in which the second central unit 70 and fourth distributed unit 60 reconfigure to use the same functional split as used by the first central unit 10. Following this reconfiguration, the cellular network 1 is as shown in Figure 3c, in which the functional split implemented between the first central unit 10 and the first, second and third distributed units 20, 30, 40 match the functional split implemented between the second central unit 70 and the fourth distributed unit 60.

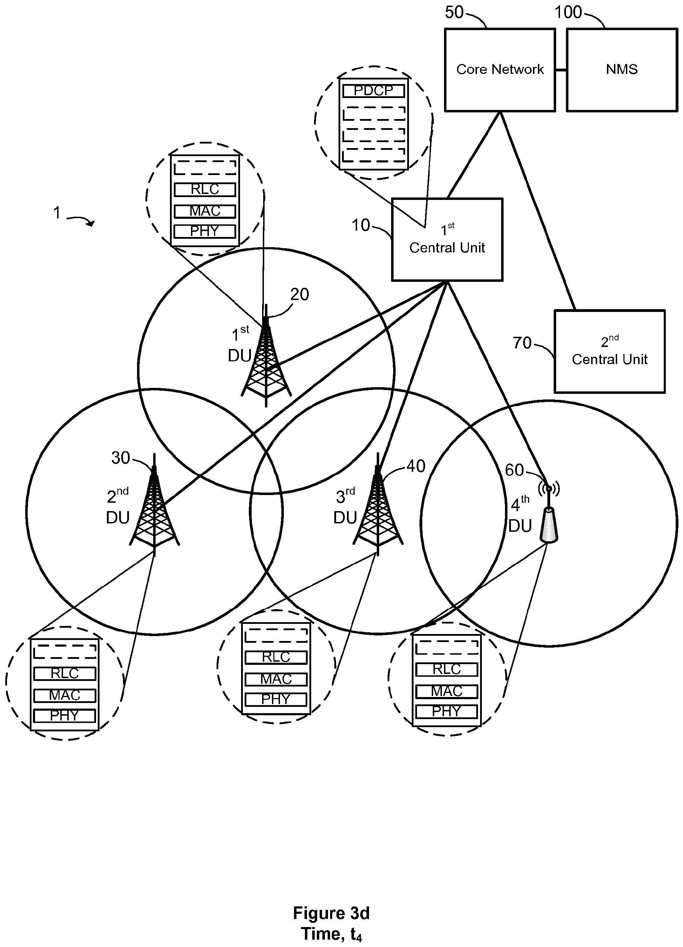

In step S19, the second central unit 70 and first central unit 10 cooperate to complete a handover of the fourth distributed unit 60 to the first central unit 10. Following the handover, the cellular network 1 is as shown in Figure 3d, in which the first central unit 10 serves the first, second, third and fourth distributed units 20, 30, 40, 60 such that it now serves the updated membership of the first cluster. Upon completion of the handover, the first central unit 10 sends a message to the NMS 100 indicating that the handover is complete.

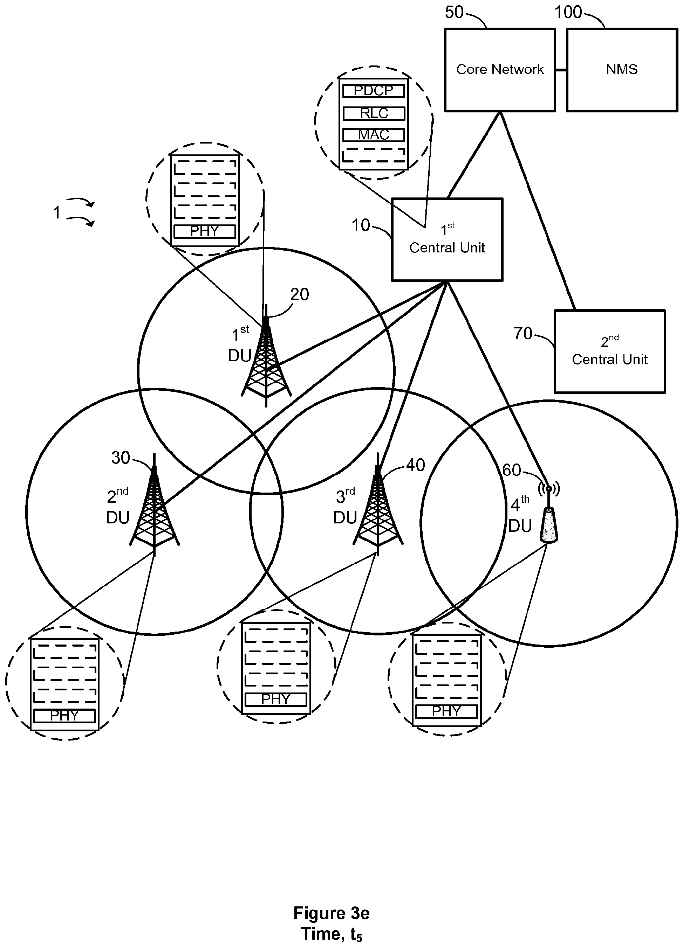

In step S21, the NMS 100 determines a functional split between each cluster of distributed units and their respective central unit and between each lone distributed unit (i.e. not being a member of a cluster) and its respective central unit (if applicable). In this embodiment, the NMS 100 compares the signal strength data (from the NRTs) to a respective threshold for each functional split, and determines that functional split B (as noted above) is suitable between the first central unit 10 and the first cluster. In step S23, the NMS 100 sends an instruction message to the first central unit 10 to implement functional split B with the first cluster. Following this reconfiguration, the cellular network 1 is as shown in Figure 3e.

The above embodiment provides the benefit of introducing a trigger for reconfiguring a functional split between a central unit and a cluster of distributed units based upon a positive identification that there is change of membership in the cluster. The cluster may be defined as a subset of distributed units having a neighbouring relationship above a particular threshold, such that the trigger for reconfiguring the functional split is effectively based upon a distributed unit increasing or decreasing its neighbouring relationship with another distributed unit passed this threshold. This is an interesting point in time to evaluate the functional split as any new member or departing member of the cluster may significantly change the potential interference across the cluster.

The neighbouring relationship threshold may be configured by the operator to reflect when signals from two neighbouring distributed units are significantly interfering that coordination by a central unit is appropriate. This may be inferred from, for example, RSRP measurements by the distributed unit or its UEs. Furthermore, the determination of what functional split to use need not be based on a comparison of the RSRP to one or more thresholds (e.g. a respective threshold for each functional split). That is, the functional split may be chosen based on the number of distributed units in a cluster.

Furthermore, the skilled person will understand that it is not essential for the steps of the invention to be carried out in the NMS. Instead, another entity (including a central unit) may perform the method.

In the above example, the fourth distributed unit was mobile such that it became part of the cluster when it moved to position p₂. However, this is non-essential and the skilled person will understand that another distributed unit may always be positioned in a suitable geographical location to be a member of the cluster but only satisfy the neighbouring relationship threshold upon (for example) reconfiguration, being re-enabled after energy saving, or becoming more heavily loaded.

Furthermore, it is non-essential that the fourth distributed unit is connected to a second central unit. That is, the fourth distributed unit may be connected to the first central unit but not satisfy the neighbouring relationship threshold to become part of the first cluster. In this scenario, the first central unit may implement different virtual machines in order to serve the first cluster using a first functional split and to serve the fourth distributed unit using a second functional split.

In the above embodiments, the fourth distributed unit was handed over to the first central unit. This is beneficial as it is easier to implement a common functional split among all distributed units. However, it is non-essential as the functional split could be coordinated across separate central units (especially if the two central units are implemented by separate virtual machines on the same platform).

In the above embodiment, the fourth distributed unit was a lone distributed unit before it joined the first cluster. However, this is non-essential. The fourth distributed unit may be part of a second cluster. In this scenario, the fourth distributed unit (and one or more other distributed units of the second cluster) may leave the second cluster and join the first cluster.

In the above embodiment, the central units and their respective distributed units implement different proportions of the overall set of functions of the protocol in use (LTE in the above example, although any other cellular/wireless communications protocol may be used). The skilled person will understand that whole layers of a protocol may be moved between the central unit and distributed unit, or just a part (i.e. function) thereof. Thus, the central unit may implement a first set of protocol functions, and a distribution unit may implement a second set of protocol functions. The first set of functions may be the lowermost function up and including a particular function, and the second set of functions may be all functions above that particular function. In other words, the first and second sets of functions may be distinct.

Furthermore, the distributed units may implement the RF functions of the protocol only, and all other functions may be implemented in the central unit. Still furthermore, the invention may be realised across a cascaded RAN in which the overall set of functions are distributed across (for example) a remote radio head, a distributed unit and a central unit.

The skilled person will understand that any combination of features is possible within the scope of the invention, as claimed.

## Claims

1. A method of operating a network node in a cellular telecommunications network (1), the cellular telecommunications network (1) having a first central base station unit (10) connecting to each of a plurality of distributed base station units (20, 30, 40), the method comprising:
identifying a cluster of distributed base station units within the plurality of distributed base station units (20, 30, 40), wherein each member of the cluster has a neighbouring relationship with another member of the cluster that satisfies a signal interference threshold, wherein a first functional split is used in which a first set of protocol functions are implemented in the first central base station unit (10) and a second set of protocol functions are implemented by each member of the cluster of distributed base station units;
identifying a change in the membership of the cluster of distributed base station units based upon a distributed base station unit increasing or decreasing its neighbouring relationship with another distributed base station unit passed the signal interference threshold; and, in response,
causing the first central base station unit (10) and each member of the cluster of distributed base station units to implement a second functional split in which a third set of protocol functions are implemented in the first central base station unit (10) and a fourth set of protocol functions are implemented by each member of the cluster of distributed base station units.

2. A method as claimed in Claim 1, wherein the change in the membership of the cluster of distributed base station units is an addition of a new distributed base station unit to the cluster, and the method further comprises the step of:
before the step of causing the first central base station unit (10) and each member of the cluster of distributed units to implement the second functional split, initiating a handover of the new distributed base station unit from a second central base station unit (70) to the first central base station unit (10).

3. A method as claimed in Claim 2, wherein, before the step of performing the handover of the new distributed base station unit, the method further comprises the step of:
causing the second central base station unit (70) and new distributed base station unit to use the first functional split in which the first set of protocol functions are further implemented in the second central base station unit (70) and the second set of protocol functions are further implemented in the new distributed base station unit.

4. A method as claimed in any one of the preceding claims, further comprising the steps of:
receiving data relating to the membership of the cluster of distributed base station units; and
determining, based on the data, that the first central base station unit (10) and each member of the cluster of distributed base station units should use the second functional split.

5. A method as claimed in any one of Claims 2 to 4, wherein the first and second central base station units (10, 20) are implemented on separate virtual machines on a network node.

6. A computer program product comprising instructions which, when the program is executed by a computer, cause the computer to carry out the method of any one of the preceding claims.

7. A computer-readable data carrier having stored thereon the computer program product of Claim 6.

8. A network node for a cellular telecommunications network (1), the network node comprising a transceiver, memory and processor adapted to cooperate to implement the steps of any one of Claims 1 to 5.

## Patentansprüche

1. Verfahren zum Betreiben eines Netzknotens in einem Mobilfunknetz (1), wobei das Mobilfunknetz (1) eine erste zentrale Basisstationseinheit (10) aufweist, die sich mit jeder von mehreren verteilten Basisstationseinheiten (20, 30, 40) verbindet, wobei das Verfahren Folgendes umfasst:
Identifizieren einer Gruppe verteilter Basisstationseinheiten innerhalb der mehreren verteilten Basisstationseinheiten (20, 30, 40), wobei jedes Mitglied der Gruppe ein Nachbarschaftsverhältnis mit einem anderen Mitglied der Gruppe hat, das einen Signalstörungsgrenzwert erfüllt, wobei eine erste funktionelle Aufteilung verwendet wird, bei der ein erster Satz von Protokollfunktionen in der ersten zentralen Basisstationseinheit (10) implementiert wird und ein zweiter Satz von Protokollfunktionen durch jedes Mitglied der Gruppe verteilter Basisstationseinheiten implementiert wird,
Identifizieren einer Veränderung bei der Zugehörigkeit zur Gruppe verteilter Basisstationseinheiten basierend darauf, dass eine verteilte Basisstationseinheit, die ihr Nachbarschaftsverhältnis mit einer anderen verteilten Basisstation, die den Signalstörungsgrenzwert erfüllt, verstärkt oder abschwächt, und
in Reaktion, Veranlassen der ersten zentralen Basisstation (10) und jedes Mitglieds der Gruppe verteilter Basisstationseinheiten, eine zweite funktionelle Aufteilung zu implementieren, bei der ein dritter Satz von Protokollfunktionen in der ersten zentralen Basisstation (10) implementiert wird und ein vierter Satz von Protokollfunktionen durch jedes Mitglied der Gruppe verteilter Basisstationseinheiten implementiert wird.

2. Verfahren nach Anspruch 1, wobei die Veränderung bei der Zugehörigkeit zur Gruppe verteilter Basisstationseinheiten ein Hinzufügen einer neuen verteilten Basisstationseinheit zu der Gruppe ist und das Verfahren ferner folgenden Schritt umfasst:
vor dem Schritt des Veranlassens der ersten zentralen Basisstation (10) und jedes Mitglieds der Gruppe verteilter Basisstationseinheiten, die zweite funktionelle Aufteilung zu implementieren, Initiieren einer Übergabe der neuen verteilten Basisstationseinheit von einer zweiten zentralen Basisstationseinheit (70) zu der ersten zentralen Basisstationseinheit (10).

3. Verfahren nach Anspruch 2, wobei das Verfahren vor dem Schritt des Durchführens der Übergabe der neuen verteilten Basisstationseinheit ferner folgenden Schritt umfasst:
Veranlassen der zweiten zentralen Basisstationseinheit (70) und der neuen verteilten Basisstationseinheit, die erste funktionelle Aufteilung zu verwenden, bei der der erste Satz von Protokollfunktionen ferner in der zweiten zentralen Basisstationseinheit (70) implementiert wird und der zweite Satz von Protokollfunktionen ferner in der neuen verteilten Basisstationseinheit implementiert wird.

4. Verfahren nach einem der vorhergehenden Ansprüche, ferner folgende Schritte umfassend:
Empfangen von Daten bezüglich der Zugehörigkeit zur Gruppe verteilter Basisstationseinheiten und
Bestimmen, dass die erste zentrale Basisstationseinheit (10) und jedes Mitglied der Gruppe verteilter Basisstationseinheiten die zweite funktionelle Aufteilung verwenden soll, basierend auf den Daten.

5. Verfahren nach einem der Ansprüche 2 bis 4, wobei die erste und die zweite zentrale Basisstationseinheit (10, 20) in separaten virtuellen Maschinen in einem Netzknoten implementiert werden.

6. Computerprogrammprodukt, Befehle beinhaltend, die bei Ausführung des Programms durch einen Computer den Computer veranlassen, das Verfahren nach einem der vorhergehenden Ansprüche auszuführen.

7. Computerlesbarer Datenträger, auf dem das Computerprogrammprodukt nach Anspruch 6 gespeichert ist.

8. Netzknoten für ein Mobilfunknetz (1), wobei der Netzknoten einen Sendeempfänger, einen Speicher und einen Prozessor umfasst, die dafür eingerichtet sind, zusammenzuarbeiten, um die Schritte von einem der Ansprüche 1 bis 5 zu implementieren.

## Revendications

1. Procédé d'exploitation d'un nœud de réseau dans un réseau de télécommunications cellulaires (1), le réseau de télécommunications cellulaires (1) comportant une première unité de station de base centrale (10) se connectant à chacune d'une pluralité d'unités de station de base distribuées (20, 30, 40), le procédé comprenant :
l'identification d'un groupe d'unités de station de base distribuées parmi la pluralité d'unités de station de base distribuées (20, 30, 40), chaque membre du groupe ayant une relation de voisinage avec un autre membre du groupe qui satisfait un seuil de brouillage de signal, dans lequel une première division fonctionnelle est utilisée selon laquelle un premier ensemble de fonctions de protocole est mis en œuvre dans la première unité de station centrale de base (10) et un second ensemble de fonctions de protocole est mis en œuvre par chaque membre du groupe d'unités de station de base distribuées ;
l'identification d'un changement d'appartenance du groupe d'unités de station de base distribuées lorsqu'une unité de station de base distribuée augmente ou diminue sa relation de voisinage avec une autre unité de station de base distribuée au-delà du seuil de brouillage de signal ;
et, en réponse,
la commande à la première unité de station de base centrale (10) et à chaque membre du groupe d'unités de station de base distribuées de mettre en œuvre une seconde division fonctionnelle selon laquelle un troisième ensemble de fonctions de protocole est mis en œuvre dans la première unité de station de base centrale (10) et un quatrième ensemble de fonctions de protocole est mis en œuvre par chaque membre du groupe d'unités de station de base distribuées.

2. Procédé selon la revendication 1, dans lequel le changement d'appartenance du groupe d'unités de station de base distribuées est un ajout d'une nouvelle unité de station de base distribuée au groupe, et le procédé comprenant en outre l'étape suivante :
avant l'étape commandant à la première unité de station de base centrale (10) et à chaque membre du groupe d'unités distribuées de mettre en œuvre la seconde division fonctionnelle, le lancement d'un transfert de la nouvelle unité de station de base distribuée d'une seconde unité de station de base centrale (70) à la première unité de station de base centrale (10).

3. Procédé selon la revendication 2, le procédé comprenant en outre, avant l'étape de réalisation du transfert de la nouvelle unité de station de base distribuée, l'étape de :
commande à la seconde unité de station centrale de base (70) et à la nouvelle unité de station de base distribuée d'utiliser la première division fonctionnelle selon laquelle le premier ensemble de fonctions de protocole est en outre mis en œuvre dans la seconde unité de station de base centrale (70) et le deuxième ensemble de fonctions de protocole est en outre mis en œuvre dans la nouvelle unité de station de base distribuée.

4. Procédé selon l'une quelconque des revendications précédentes, comprenant en outre les étapes de :
réception de données relatives à l'appartenance au groupe d'unités de station de base distribuées ; et
détermination, en fonction des données, que la première unité de station de base centrale (10) et chaque membre du groupe d'unités de station de base distribuées devraient utiliser la seconde division fonctionnelle.

5. Procédé selon l'une quelconque des revendications 2 à 4, dans lequel les première et seconde unités de station de base centrale (10, 20) sont mises en œuvre sur des machines virtuelles distinctes sur un nœud de réseau.

6. Produit-programme informatique comprenant des instructions qui, à l'exécution du programme par un ordinateur, amènent l'ordinateur à mettre en œuvre le procédé selon l'une quelconque des revendications précédentes.

7. Support de données lisible par ordinateur sur lequel est mémorisé le produit-programme informatique selon la revendication 6.

8. Nœud de réseau d'un réseau de télécommunications cellulaires (1), le nœud de réseau comprenant un émetteur-récepteur, une mémoire et un processeur conçus pour coopérer à la mise en œuvre des étapes selon l'une quelconque des revendications 1 à 5.
